# EUROPÄISCHE PATENTANMELDUNG

(11) **EP 2 562 223 A1**
(43) Veröffentlichungstag der Anmeldung: **27.02.2013**
(21) Anmeldenummer: 11179077.0
(22) Anmeldetag: 26.08.2011
(51) Int. Cl.: C08L 101/10

(54) **Zweikomponentige Zusammensetzung auf Basis von silanfunktionellen Polymeren**

(71) Anmelder: Sika Technology AG, 6340 Baar (CH)
(72) Erfinder: BURCKHARDT, Urs, 8049 Zürich (CH); KELCH, Steffen, 8102 Oberengstringen (CH); WOLF, Ulrich, 7031 Laax (CH); CHOFFAT, Fabien, 4522 Rüttenen (CH); RUTZ, Daniele, 8049 Zürich (CH)
(74) Vertreter: Sika Patent Attorneys

(57) **Zusammenfassung**

Die vorliegende Erfindung betrifft eine zweikomponentige Zusammensetzung bestehend aus einer Komponente **A** umfassend mindestens ein silanfunktionelles Polymer und mindestens einen Härter oder Beschleuniger für Epoxidharze, und einer Komponente **B** umfassend mindestens eine wässrige Emulsion von mindestens einem Epoxidharz.

Erfindungsgemässe zweikomponentige Zusammensetzungen eignen sich als Klebstoff, Dichtstoff oder Beschichtung.

## Beschreibung

### Technisches Gebiet

Die Erfindung betrifft zweikomponentige Zusammensetzungen auf Basis silanfunktioneller Polymere, welche sich als Klebstoffe, Dichtstoffe oder Beschichtungen eignen.

### Stand der Technik

Härtbare Massen auf Basis von silanfunktionellen Polymeren sind bekannt. Sie zeichnen sich durch eine blasenfreie Aushärtung sowie durch hohe Haftkräfte aus. Die meisten der bekannten Zusammensetzungen dieser Art werden als einkomponentige Zusammensetzungen formuliert, welche mit Luftfeuchtigkeit aushärten. Dies bringt den Nachteil mit sich, dass die Zeit bis zur vollständigen Aushärtung, d.h. zur Erreichung der Endfestigkeit, relativ lange ist, da die Feuchtigkeit durch Diffusion in die Zusammensetzung gelangen muss, was bei dickschichtigen Anwendungen bzw. bei der Applikation der Zusammensetzung auf, jedoch insbesondere bei der Verklebung von, feuchtigkeitsundurchlässigen Substraten nur sehr langsam vonstatten geht.
Es ist bekannt, die Aushärtung von einkomponentigen Zusammensetzungen auf Basis von silanfunktionellen Polymeren dadurch zu beschleunigen, dass dieser bei der Applikation eine Komponente zugemischt wird, welche Wasser in freier oder gebundener Form enthält. Beispielsweise ist ein derartiges System beschrieben in EP0371370. Derartig beschleunigte Einkomponentensysteme härten zwar rasch aus, sind jedoch aufgrund der asymmetrischen Mischverhältnisse empfindlich in Bezug auf Mischgüte und Menge des zugesetzten Wassers. Ausserdem sind sie genau wie die unbeschleunigten Einkomponentensysteme in Bezug auf die erreichbaren mechanischen Eigenschaften, wie Festigkeit und Zähelastizität, eingeschränkt und neigen in gewissen Fällen zu Sprödigkeit.
Zusammensetzungen auf Basis silanfunktioneller Polymere mit besseren mechanischen Eigenschaften, insbesondere höherer Festigkeit und Zähelastizität, können beispielsweise erhalten werden, wenn das silanfunktionelle Polymer als Hybridsystem mit einem Epoxidharz kombiniert wird, wie beispielsweise beschrieben bei EP0186191. Es handelt sich hier um zweikomponentige Systeme, in denen typischerweise das silanfunktionelle Polymer in der ersten Komponente und das Epoxidharz in der zweiten Komponente vorliegen. Die Aushärtung des silanfunktionellen Polymers verläuft dabei über Luftfeuchtigkeit.
Solche Hybridsysteme weisen aufgrund der hohen Viskosität sowohl der silanfunktionellen Polymere als auch der Epoxidharze oft ungenügende Applikationseigenschaften auf. Bei Klebstoffen äussert sich dies beispielsweise in einem langen Fadenzug und schlechter Standfestigkeit und erfordert einen hohen Einsatz von Rheologiehilfsmittein. Schließlich weisen sie bei der Applikation einen ausgeprägten, unangenehmen Amingeruch auf.

### Darstellung der Erfindung

Aufgabe der vorliegenden Erfindung ist es daher, die Nachteile des Stands der Technik zu überwinden und somit eine Zusammensetzungen auf Basis silanfunktioneller Polymere bereitzustellen, welche unabhängig von den Applikationsbedingungen wie Temperatur und Luftfeuchtigkeit rasch und ohne eine klebrige Oberfläche zu hinterlassen aushärtet und im ausgehärteten Zustand über eine hohe Festigkeit und Zähelastizität, gute Haftung auf verschiedenartigen Substraten sowie eine hohe thermische Beständigkeit verfügt. Weiterhin soll die Zusammensetzung im unvernetzten Zustand eine hohe Lagerstabilität und eine gute Applizierbarkeit, insbesondere bei Raumtemperatur, aufweisen.

Erfindungsgemäss wird diese Aufgabe durch eine zweikomponentige Zusammensetzung gemäss Anspruch 1 gelöst.

Oberraschenderweise wurde gefunden, dass die Kombination eines silanfunktionellen Polymers in einem nichtwässrigen System mit einer wässrigen Emulsion von mindestens einem Epoxidharz zu keinerlei Verträglichkeitsproblemen, weiche Entmischung und markroskopische Phasentrennung verursachen könnten, führt. Stattdessen zeichnet sich die erfindungsgemässe Zusammensetzung durch gute mechanische Eigenschaften aus.

Ein weiterer Vorteil, der erfindungsgemässen Zusammensetzung liegt darin, dass sie bei Bedarf in einer Weise hergestellt werden kann, dass sie unmittelbar nach der Applikation eine gute Stand- und Abrutschfestigkeit aufweist, was bei vielen Anwendungen, wie beispielsweise bei der Applikation der Zusammensetzung an vertikalen Oberflächen, erwünscht ist.
Weiterhin erweist sich die erfindungsgemässe Zusammensetzung im Gegensatz zu bekannten Hybridsystemen auf Basis von silanfunktionellen Polymeren und Epoxidharz bei der Applikation als geruchsarm.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine zweikomponentige Zusammensetzung bestehend aus einer Komponente **A** umfassend
- mindestens ein silanfunktionelles Polymer **P,** und
- mindestens einen Härter oder Beschleuniger für Epoxidharze;
und einer Komponente **B** umfassend
- mindestens eine wässrige Emulsion von mindestens einem Epoxidharz.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymere" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromoleküle erhalten wurden und die chemisch einheitlich oder chemisch uneinheitlich sein können. Der Begriff umfasst wieterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Im vorliegenden Dokument bezeichnen die Terme "Silan" bzw. "Organosilan" Verbindungen, welche einerseits mindestens eine, üblicherweise zwei oder drei, über Si-O-Bindungen, direkt an das Siliciumatom gebundene Alkoxygruppen oder Acyloxygruppen aufweisen, und andererseits mindestens einen, über eine Si-C-Bindung, direkt an das Siliciumatom gebundenen organischen Rest aufweisen. Derartige Silane sind dem Fachmann auch als Organoalkoxysilane bzw. Organoacyloxysilane bekannt.
Entsprechend bezeichnet der Begriff "Silangruppen" die an den, über die Si-C-Bindung gebundenen, organischen Rest des Silans gebundene siliciumhaltige Gruppe. Die Silane, beziehungsweise deren Silangruppen, haben die Eigenschaft, bei Kontakt mit Feuchtigkeit zu hydrolysieren. Dabei bilden sich Organosilanole, das heisst siliciumorganische Verbindungen enthaltend eine oder mehrere Silanolgruppen (Si-OH-Gruppen) und, durch nachfolgende Kondensationsreaktionen, Organosiloxane, das heisst siliciumorganische Verbindungen enthaltend eine oder mehrere Siloxangruppen (Si-O-Si-Gruppen). Der Begriff "silanfunktionell" bezeichnet Verbindungen, die Silangruppen aufweisen. "Silanfunktionelle Polymere" sind demnach Polymere, welche mindestens eine Silangruppe aufweisen.
Als "Aminosilane" bzw. "Mercaptosilane" werden Organosilane bezeichnet, deren organischer Rest eine Aminogruppe bzw. eine Mercaptogruppe aufweist. Als "primäre Aminosilane" werden Aminosilane bezeichnet, welche eine primäre Aminogruppe aufweisen, also eine NH₂-Gruppe, die an einen organischen Rest gebunden ist. Als "sekundäre Aminosilane" werden Aminosilane bezeichnet, welche eine sekundäre Aminogruppe aufweisen, also eine NH-Gruppe, die an zwei organische Reste gebunden ist.
Unter "Molekulargewicht" versteht man im vorliegenden Dokument stets das Molekulargewichtsmittel Mₙ (Zahlenmittel).
Als "Raumtemperatur" wird im vorliegenden Dokument eine Temperatur von 23°C bezeichnet.

Die Komponente **A** der erfindungsgemässen Zusammensetzung enthält mindestens ein silanfunktionelles Polymer P**,** welches insbesondere Endgruppen der Formel (I) aufweist.

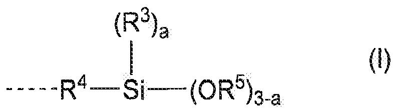

Dabei steht der Rest R³ für einen linearen oder verzweigten, einwertigen Kohlenwasserstoffrest mit 1 bis 8 C-Atomen, insbesondere für eine Methyl- oder Ethylgruppe.
Der Rest R⁴ steht für einen linearen oder verzweigten, zweiwertigen Kohlenwasserstoffrest mit 1 bis 12 C-Atomen, weicher gegebenenfalls cyclische und/oder aromatische Anteile, und gegebenenfalls ein oder mehrere Heteroatome, insbesondere ein oder mehrere Stickstoffatome, aufweist. Insbesondere steht R⁴ für eine lineare oder verzweigte Alkylengruppe mit 1 bis 6 C-Atomen, bevorzugt für Methylen oder 1,3-Propylen, besonders bevorzugt für 1,3-Propylen.
Der Rest R⁵ steht für einen Acylrest oder für einen linearen oder verzweigten, einwertigen Kohlenwasserstoffrest mit 1 bis 5 C-Atomen, insbesondere für eine Methyl-, Ethyl- oder Isopropylgruppe.
Der Index a steht für einen Wert von 0 oder 1 oder 2, insbesondere für einen Wert von 0.

Innerhalb einer Silangruppe der Formel (I) stehen R³ und R⁵ jeweils unabhängig voneinander für die beschriebenen Reste. So sind beispielsweise auch Verbindungen mit Endgruppen der Formel (I) möglich, welche Ethoxydimethoxysilan-Endgruppen (R⁵= Methyl, R⁵ = Methyl, R⁵ = Ethyl) sind.

In einer ersten Ausführungsform ist das silanfunktionelle Polymer **P** ein silanfunktionelles Polyurethanpolymer **P1**, welches erhältlich ist durch die Umsetzung eines Silans, welches mindestens eine gegenüber Isocyanatgruppen reaktive Gruppe aufweist, mit einem Polyurethanpolymer, welches Isocyanatgruppen aufweist. Diese Umsetzung wird bevorzugt in einem stöchiometrischen Verhältnis der gegenüber Isocyanatgruppen reaktiven Gruppen zu den Isocyanatgruppen von 1:1 oder mit einem leichten Überschuss an gegenüber Isocyanatgruppen reaktiven Gruppen durchgeführt, so dass das resultierende silanfunktionelle Polyurethanpolymer **P1** gänzlich frei von Isocyanatgruppen ist. In der Umsetzung des Silans, welches mindestens eine gegenüber Isocyanatgruppen reaktive Gruppe aufweist, mit einem Polyurethanpolymer, welches Isocyanatgruppen aufweist, kann das Silan prinzipiell, wenn auch nicht bevorzugt, unterstöchiometrisch eingesetzt werden, so dass ein silanfunktionelles Polymer erhalten wird, welches sowohl Silangruppen als auch Isocyanatgruppen aufweist.
Das Silan, welches mindestens eine gegenüber Isocyanatgruppen reaktive Gruppe aufweist, ist insbesondere ein Mercaptosilan oder ein Aminosilan, bevorzugt ein Aminosilan.
Bevorzugt ist das Aminosilan ein Aminosilan **AS** der Formel (II), 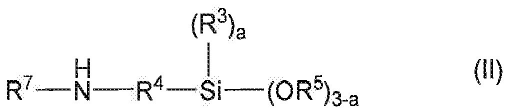 wobei R³, R⁴, R⁵ und a bereits vorhergehend beschrieben worden sind und R⁷ für ein Wasserstoffatom oder für einen linearen oder verzweigten, einwertigen Kohlenwasserstoffrest mit 1 bis 20 C-Atomen, welcher gegebenenfalls cyclische Anteile aufweist, oder für einen Rest der Formel (III) steht.

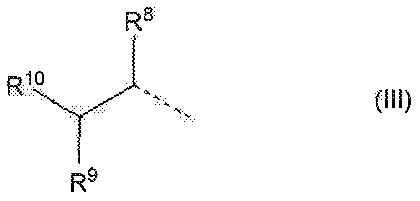

Dabei stehen die Reste R⁸ und R⁹ jeweils unabhängig voneinander für ein Wasserstoffatom oder für einen Rest aus der Gruppe bestehend aus-R¹¹, -COOR¹¹ und -CN.
Der Rest R¹⁰ steht für ein Wasserstoffatom oder für einen Rest aus der Gruppe bestehend aus -CH₂-COOR¹¹, -COOR¹¹, -CONHR¹¹, -CON(R¹¹)₂, -CN, -NO₂, -PO(OR¹¹)₂, -SO₂R¹¹ und -SO₂OR¹¹.
Der Rest R¹¹ steht für einen, gegebenenfalls mindestens ein Heteroatom aufweisenden, Kohlenwasserstoffrest mit 1 bis 20 C-Atomen.

Beispiele für geeignete Aminosilane **AS** sind primäre Aminosilane wie 3-Aminopropyltrimethoxysilan, 3-Aminopropyldimethoxymethylsilan; sekundäre Aminosilane wie N-Butyl-3-aminopropyltrimethoxysilan, N-Phenyl-3-aminopropyltrimethoxysilan; die Produkte aus der Michael-artigen Addition von primären Aminosilanen wie 3-Aminopropyltrimethoxysilan oder 3-Aminopropyldimethoxymethylsilan an Michael-Akzeptoren wie Acrylnitril, (Meth)acrylsäureestern, (Meth)acrylsäureamiden, Maleinsäure- und Fumarsäurediestern, Citraconsäurediestern und Itaconsäurediestem, beispielsweise N-(3-Trimethoxysilyl-propyl)-amino-bernsteinsäuredimethyl- und -diethylester; sowie Analoga der genannten Aminosilane mit Ethoxy- oder Isopropoxygruppen anstelle der Methoxygruppen am Silicium. Als Aminosilane **AS** besonders geeignet sind sekundäre Aminosilane, insbesondere Aminosilane **AS**, bei denen R⁷ in Formel (II) verschieden von H ist. Bevorzugt sind die Michael-artigen Addukte, insbesondere N-(3-Trimethoxysilyl-propyl)-amino-bernsteinsäurediethyl-ester.

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen in einer der Michael-Addition analogen Weise nucleophile Additionsreaktionen einzugehen (Hetero-Michael-Addition).

Als Isocyanatgruppen aufweisendes Polyurethanpolymer zur Herstellung eines silanfunktionellen Polyurethanpolymers **P1** eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.
Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiol, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.
Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.

Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-Caprolacton.
Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-Caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole,
Weitere geeignete Polyole sind Poly(meth)acrylatpolyole.

Weiterhin geeignet sind polyhydroxyfunktionelle Fette und Öle, beispielsweise natürliche Fette und Öle, insbesondere Ricinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fehalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.
Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3-und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Zur Einstellung der OH-Funktionalität der Polyole können einwertige Alkohole (Monoole) mitverwendet werden, beispielsweise Butanol, 2-Ethylhexanol oder ein Alkohol-gestartetes Polyoxyalkylenmonool.

Als Polyisocyanate für die Herstellung des Polyurethanpolymers können handelsübliche Polyisocyanate, insbesondere Diisocyanate, verwendet werden. Beispielsweise sind geeignete Diisocyanate 1,6-Hexamethylendiisocyanat (HDl), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-isocyanato-3,3,5-trimethyl-5-isocyanatomethyl-cyclohexan (Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3-und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1 ,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Polyisocyanate, sowie beliebige Mischungen der vorgenannten Polyisocyanate.
Besonders geeignete Polyisocyanate sind HDI, TMDI, IPDI, TDI sowie MDI, insbesondere IPDI.

Beispielsweise sind geeignete silanfunktionelle Polymere **P1** kommerziell erhältlich unter den Handelsnamen Polymer ST, beispielsweise Polymer ST50, von der Firma Hanse Chemie AG, Deutschland, sowie unter dem Handelsnamen Desmoseal^{®} von der Firma Bayer MaterialScience AG, Deutschland.

Das silanfunktionelle Polymer **P** ist in einer zweiten Ausführungsform ein silanfunktionelles Polyurethanpolymer **P2,** erhältlich durch die Umsetzung eines Isocyanatosilans **IS** mit einem Polymer, welches gegenüber Isocyanatgruppen reaktive funktionelle Endgruppen, insbesondere Hydroxylgruppen, Mercaptogruppen und/oder Aminogruppen, aufweist. Diese Umsetzung erfolgt im stöchiometrischen Verhältnis der Isocyanatgruppen zu den gegenüber Isocyanatgruppen reaktiven funktionellen Endgruppen von 1:1, oder mit leichtem Überschuss der gegenüber Isocyanatgruppen reaktiven funktionellen Endgruppen, beispielsweise bei Temperaturen von 20°C bis 100°C, gegebenenfalls unter Mitverwendung von Katalysatoren.
Als Isocyanatosilan **IS** geeignet sind Verbindungen der Formel (V). 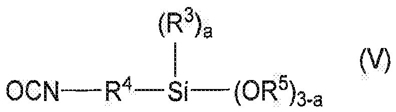 wobei R³, R⁵, R⁴ und a bereits vorhergehend beschrieben wurden.
Beispiele für geeignete Isocyanatosilane **IS** der Formel (V) sind Isocyanatomethyltrimethoxysilan, Isocyanatomethyldimethoxymethylsilan 3-Isocyanatopropyltrimethoxysilan, 3-Isocyanatopropyldimethoxymethylsilan, und deren Analoga mit Ethoxy- oder Isopropoxygruppen anstelle der Methoxygruppen am Silicium.
Bevorzugt weist das Polymer als gegenüber Isocyanatgruppen reaktive funktionelle Endgruppen Hydroxylgruppen auf.
Als Hydroxylgruppen aufweisende Polymere eignen sich einerseits bereits genannten Polyole, insbesondere hochmolekulare Polyoxyalkylenpolyole, bevorzugt Polyoxypropylendiole mit einem Ungesättigtheitsgrad tiefer als 0.02 mEq/g und mit einem Molekulargewicht im Bereich von 2000 bis 30'000 g/mol, insbesondere solche mit einem Molekulargewicht im Bereich von 4000 bis 30'000 g/mol.
Andererseits eignen sich auch Hydroxylgruppen aufweisende, insbesondere Hydroxylgruppen terminierte, Polyurethanpolymere zur Umsetzung mit Isocyanatosilanen **IS** der Formel (V). Solche Polyurethanpolymere sind erhältlich durch die Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyol so dosiert ist, dass dessen Hydroxylgruppen im Verhältnis zu den Isocyanatgruppen des Polyisocyanates im stöchiometrischen Überschuss vorhanden sind. Bevorzugt ist ein Verhältnis von Hydroxylgruppen zu Isocyanatgruppen von 1.3:1 bis 4:1, insbesondere von 1.8:1 bis 3:1.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.

Für diese Umsetzung geeignet sind dieselben Polyole und Polyisocyanate, die bereits als geeignet zur Herstellung eines Isocyanatgruppen aufweisenden Polyurethanpolymers erwähnt wurden, welches zur Herstellung eines silanfunktionellen Polyurethanpolymers **P1** verwendet wird.
Beispielsweise sind geeignete silanfunktionelle Polymere **P2** kommerziell erhältlich unter den Handelsnamen SPUR+^{®} 1010LM, 1015LM und 1050MM von der Firma Momentive Performance Materials Inc., USA, sowie unter den Handelsnamen Geniosil^{®} STP-E15, STP-10 und STP-E35 von der Firma Wacker Chemie AG, Deutschland.

In einer dritten Ausführungsform ist das silanfunktionelle Polymer **P** ein silanfunktionelles Polymer **P3,** welches erhältlich ist durch eine Hydrosilylierungsreaktion von Polymeren mit endständigen Doppelbindungen, beispielsweise Poly(meth)acrylatpolymere oder Polyetherpolymere, insbesondere von allylterminierten Polyoxyalkylenpolymeren, beschrieben beispielsweise in US 3,971,751 und US 6,207,766, deren gesamte Offenbarung hiermit eingeschlossen ist.
Beispielsweise sind geeignete silanfunktionelle Polymere **P3** kommerziell erhältlich unter den Handelsnamen MS Polymer™ S203H, S303H, S227, S810, MA903 und S943, Silyl™ SAX220, SAX350, SAX400 und SAX725, Silyl™ SAT350 und SAT400, sowie XMAP™ SA100S und SA310S von der Firma Kaneka Corp., Japan, sowie unter den Handelsnamen Excestar^{®} S2410, S2420, S3430, S3630, W2450 und MSX931 von der Firma Asahi Glass Co, Ltd., Japan.

Als silanfunktionelles Polymer **P** bevorzugt sind silanfunktionelle Polymere **P1** und silanfunktionelle Polyurethanpolymere **P3.** Besonders bevorzugt sind silanfunktionelle Polymere **P1.**

Oblicherweise ist das silanfunktionelle Polymer **P** in einer Menge von 10 bis 80 Gew.-%, insbesondere in einer Menge von 15 bis 70 Gew.-%, bevorzugt 20 bis 60 Gew.-%, bezogen auf die gesamte Zusammensetzung, vorhanden.

Die Komponente **A** der erfindungsgemässen Zusammensetzung enthält neben dem silanfunktionellen Polymer weiterhin mindestens einen Härter oder Beschleuniger für Epoxidharze. Insbesondere handelt es sich dabei um Polyamine, beispielsweise Isophorondiamin, m-Xylylendiamin, Polyetheramine wie sie beispielsweise unter dem Handelsnamen Jeffamine^{®} kommerziell erhältlich sind von Huntsman International LLC, USA, Polyethylenimine, Polyamidoamine, Polyalkylenamine wie Diethylentriamin (DETA), Triethylentetramin (TETA), Tetraethylenpentamin (TEPA) oder Pentaethylenhexamin (PEHA), Amin-Epoxy-Addukte, Pentamethyldiethylentriamin, N,N-Dimethyl-N'-(dimethylaminopropyl)-1,3-propandiamin, Bis(2-dimethylaminoethyl)ether, Bis-(dimethylaminoethyl)-piperazin, N,N'-Dimethylpiperazin; um Mannich-Basen, beispielsweise Dimethylam inomethylphenol, 2,4,6-Tris(dimethylaminomethyl)-phenol und 2,4,6-Tris((3-(dimethylamino)propyl)aminomethyl)phenol; um Polymercaptane, beispielsweise flüssige Mercaptan-terminierte Polysulfid-Polymere, wie sie unter den Markennamen Thiokol^{®} von SPI Supplies, USA, oder Toray Fine Chemicals, Japan, und Thioplas^{®} von Akzo Nobel NV, Niederlande, bekannt sind, Mercaptan-terminierte Polyoxyalkylen-Derivate, wie sie unter dem Markennamen Capcure^{®} von Cognis GmbH, Deutschland, bekannt sind, Polyester von Thiocarbonsäuren wie Pentaerythritoltetramercaptoacetat, Trimethylolpropantrimercaptoacetat und Glykoldimercaptoacetat, und aromatische Polymercaptane wie 2,4,6-Trimercapto-1,3,5-triazin; oder um Imidazole, beispielsweise lmidazol, 1-Methylimidazol, 1-Ethylimidazol, 1-Vinylimidazol, 2-Methylimidazol, 2-Ethylimidazol, 2-Isopropylimidazol, 2-Heptadecylimidazol, 2-Phenylimidazol, 2-Ethyl-4-methylimidazol, 1-Benzyl-2-methylimidazol und 2,4-Diamino-6-(2'-methylimidazolyl-(1'))-ethyl-s-triazin; sowie Mischungen der vorgenannten Härter oder Beschleuniger für Epoxidharze.
Zusätzlich zu den genannten Härtern oder Beschleunigern können weitere Beschleuniger, insbesondere Phosphite, Säuren, insbesondere Phosphorsäure und Carbonsäuren, eingesetzt werden.

Als Härter oder Beschleuniger für Epoxidharze bevorzugt sind tertiäre Polyamine, insbesondere Pentamethyldiethylentriamin, N,N-Dimethyl-N'-(dimethylaminopropyl)-1,3-propandiamin, Bis(2-dimethylaminoethyl)ether, Bis-(dimethylaminoethyl)-piperazin, N,N'-Dimethylpiperazin; Mannich-Basen, insbesondere Dimethylaminomethylphenol, 2,4,6-Tris(dimethylaminomethyl)-phenol und 2,4,6-Tris((3-(dimethylamino)propyl)aminomethyl)phenol; sowie Imidazole, insbesondere 1-Methylimidazol, 1-Ethylimidazol, 1-Vinylimidazol, 2-Methylimidazol, 2-Ethylimidazol, 2-Isopropylimidazol, 2-Heptadecylimidazol, 2-Ethyl-4-methylimidazol und 1-Benzyl-2-methylimidazol. Besonders bevorzugt sind die genannten Mannich-Basen.

Vorzugsweise beträgt der Anteil des Härters oder Beschleunigers für Epoxidharze 0.5 bis 15 Gew.-%, insbesondere 1 bis 10 Gew.-%, bezogen auf die Komponente **A**.

Die Komponente **B** der erfindungsgemässen Zusammensetzung umfasst mindestens eine wässrige Emulsion von mindestens einem Epoxidharz.

Das Epoxidharz stellt vorzugsweise ein Flüssigharz dar. Bevorzugte Epoxid-Flüssigharze weisen die Formel (VI) auf. 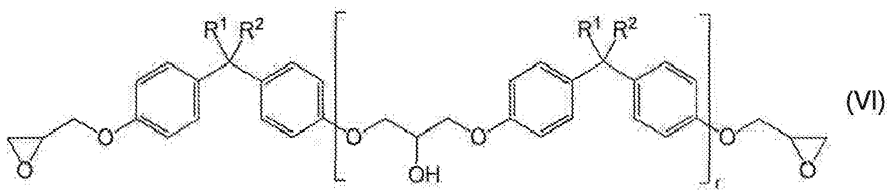 Hierbei stehen die Substituenten R¹ und R² unabhängig voneinander entweder für H oder CH₃. Weiterhin steht der Index r für einen Wert von 0 bis 1. Bevorzugt steht r für einen Wert von ≤ 0.2.
Es handelt sich somit vorzugsweise um Diglycidylether von Bisphenol A (DGEBA), von Bisphenol F sowie von Bisphenol A/F. Die Bezeichnung "A/F" verweist hierbei auf eine Mischung von Aceton mit Formaldehyd, welche als Edukt bei der Herstellung von Bisphenol A/F verwendet wird. Geeignete Flüssigharze sind beispielsweise unter den Handelsnamen Araldite^{®} GY 250, Araldite^{®} GY 282, Araldite^{®} PY 304 von Huntsman International LLC, USA, oder D.E.R.^{®} 330 oder D.E.R.^{®} 331 von Dow Chemical Company, USA, oder unter dem Handelsnamen Epikote^{®} 828 oder Epikote^{®} 862 von Hexion Specialty Chemicals Inc, USA, kommerziell erhältlich.
Das Epoxidharz liegt typischerweise in unmodifizierter Form vor. Insbesondere ist es nicht hinsichtlich besserer Emulgierbarkeit modifiziert, beispielsweise mit einer Fettsäure.

Die wässrige Emulsion von mindestens einem Epoxidharz enthält optional mindestens einen Reaktivverdünner. Als Reaktivverdünner eignen sich insbesondere monofunktionelle Epoxide, bevorzugt glycidylisierte Fettalkohole.

Bevorzugt enthält die Emulsion weiterhin mindestens einen externen Emulgator, insbesondere einen nichtionischen Emulgator, beispielsweise ein Fettalkoholethoxylat.
Bevorzugt weist die Emulsion einen Gehalt an Emulgator von ≤ 10 Gew.-%, insbesondere ≤ 5 Gew.-%, auf.

Die Emulsion weist vorzugsweise einen Feststoffgehalt von 60 bis 90 Gew.-%, insbesondere von 70 bis 90 Gew.-%, bevorzugt von 75 bis 85%, auf. Entsprechend weist die wässrige Emulsion von mindestens einem Epoxidharz insbesondere etwa 10 bis 40 Gew.-%, insbesondere 10 bis 30 Gew.-%, bevorzugt 15 bis 25 Gew.-%, Wasser auf.

Die mittlere Teilchengrösse (Tröpfchendurchmesser) der Emulsion liegt insbesondere im Bereich von 0.05 bis 10 µm, insbesondere von 0.1 bis 7 µm, besonders bevorzugt von 0.2 bis 5 µm. Die Emulsion weist dabei bevorzugt eine enge Teilchengrössenverteilung auf, wobei das Grössenverhältnis der grössten zu den kleinsten Partikeln einen Wert im Bereich von ≤ 25, bevorzugt ≤ 20, aufweist. Insbesondere ist die Teilchengrössenverteilung derart, dass 90% der Teilchen in der Emulsion kleiner sind als 6 µm, bevorzugt kleiner als 4 µm, besonders bevorzugt kleiner als 3 µm.
Durch die geringe mittlere Teilchengrösse und die enge Teilchengrössenverteilung zeigt die Emulsion eine geringe Neigung zum Aufrahmen oder Absetzen und ist damit lange lagerfähig.

Die Herstellung der Emulsion erfolgt bevorzugt in einem kontinuierlichen Verfahren, insbesondere mittels Stator-Rotor-Mischer. Ein solches Verfahren ist dem Fachmann bekannt. Die Vorteile dieses Herstellverfahrens liegen insbesondere darin, dass die Emulsion auch bei relativ hoher Viskosität des Epoxidharzes ohne Zusatz von Lösemitteln herstellbar ist.
Weiterhin vorteilhaft ist, dass durch die Fahrweise nahe am Phaseninversionspunkt hohe bis sehr hohe Feststoffgehalte bei kleinen, eng verteilten Teilchengrössen möglich sind, wodurch Emulsionen mit besonders hohen Lagerstabilitäten erhalten werden.
Weitere Vorteile des beschriebenen Verfahrens liegen darin, dass sich die Emulsion durch das Verfahren nur wenig erhitzt und dass sie kostengünstig hergestellt werden kann.
Bevorzugt erfolgt die Herstellung ohne Zusatz von Lösemitteln.

Die Komponenten **A** und **B** enthalten insbesondere weitere Bestandteile wie Füllstoffe und Verstärker, Pigmente, Weichmacher bzw. Verdünner, Härter und Vernetzer, Beschleuniger und Katalysatoren, Stabilisatoren, Haftvermittler, Rheologiehilfsmitel, Trocknungsmittel und dergleichen. Beim Einsatz derartiger weiterer Bestandteile ist darauf zu achten, dass diese untereinander sowie mit der jeweiligen Komponente verträglich sind und keine vorzeitigen Reaktionen, insbesondere mit dem silanfunktionellen Polymer bzw. mit dem Epoxidharz, eingehen.

Die Komponente **A** der erfindungsgemässen Zusammensetzung enthält insbesondere mindestens einen Katalysator für die Vernetzung der silanfunktionellen Polymere mittels Feuchtigkeit. Derartige Katalysatoren sind insbesondere Organozinnverbindungen, beispielsweise Dibutylzinndilaurat, Dioctylzinndilaurat, Dibutylzinndiacetylacetonat und Dioctylzinndiacetylacetonat; Titanate und Zirkonate, beispielsweise Tetraisobutoxytitanat und Diisobutoxytitan-bis-(ethylacetoacetat); Stickstoffverbindungen, insbesondere tertiäre Amine, beispielsweise N,N-Dimethylbenzylamin, N,N-Dimethylcydohexylamin und 1,4-Diazabicyclo[2.2.2]octan, und Amidine und Guanidine, beispielsweise 1,8-Diazabicyclo[5.4.0]undec-7-en und 1,1,3,3-Tetramethylguanidin; sowie Mischungen der genannten Katalysatoren.

Die Komponente **A** der erfindungsgemässen Zusammensetzung enthält weiterhin insbesondere mindestens ein Aminosilan, ein Epoxysilan oder ein Mercaptosilan. Besonders geeignet sind dabei 3-Aminopropyl-dialkoxyalkylsilane, 3-Aminopropyl-trialkoxysilane, N-(2-Aminoethyl)-3-aminopropyl-dialkoxyalkylsilane, N-(2-Aminoethyl)-3-aminopropyl-trialkoxysilane, 3-Glycidoxypropyltrialkoxysilane und 3-Mercaptopropyl-trialkoxysilane. Bevorzugt handelt es sich dabei um 3-Aminopropyl-trimethoxysilan, 3-Aminopropyltriethoxysilan, N-(2-Aminoethyl)-3-aminopropyl-dimethoxymethylsilan, N-(2-Aminoethyl)-3-aminopropyl-trimethoxysilan, N-(2-Aminoethyl)-3-aminopropyltriethoxysilan, 3-Glycidoxypropyltrimethoxysilan, 3-Glycidoxypropyltriethoxysilan, 3-Mercaptopropyl-trimethoxysilan und 3-Mercaptopropyl-triethoxysilan. Der Einsatz eines derartigen Aminosilans in der Komponente **A** der erfindungsgemässen Zusammensetzung kann nach dem Vermischen der Komponenten eine verbesserte Verträglichkeit der unterschiedlichen Phasen sowie eine kovalente Verknüpfung des silanfunktionellen Polymers mit dem Epoxidharz bewirken.

Vorzugsweise umfasst die Komponente **A** der erfindungsgemässen Zusammensetzung zusätzlich mindestens einen Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearinsäure, beschichtet sind, Bariumsulfat, calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ, PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
Es ist durchaus möglich und kann sogar von Vorteil sein, eine Mischung verschiedener Füllstoffe einzusetzen.
Eine geeignete Menge Füllstoff in der Komponente **A** liegt beispielsweise im Bereich von 20 bis 70 Gew.-%, bevorzugt 30 bis 60 Gew.-%, bezogen auf die gesamte Zusammensetzung.

Weiterhin kann die Komponente **A** der erfindungsgemässen Zusammensetzung zusätzliche Bestandteile enthalten, beispielsweise Weichmacher wie Ester organischer Carbonsäuren oder deren Anhydride, wie Phthalate, beispielsweise Dioctylphthalat, Diisononylphthalat oder Diisodecylphthalat, Adipate, beispielsweise Dioctyladipat, Azelate und Sebacate, Polyole, beispielsweise Polyoxyalkylenpolyole oder Polyesterpolyole, organische Phosphor- und Sulfonsäureester oder Polybutene; Lösungsmittel; Fasern, beispielsweise aus Polyethylen; Farbstoffe; Pigmente; Rheologie-Modifizierer wie Verdickungsmittel oder Thixotropierungsmittel, beispielsweise Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren; Haftvermittler, beispielsweise Epoxysilane, (Meth)acrylsilane, Anhydridosilane, Addukte der vorgenannten Silane mit primären Aminosilanen, sowie Aminosilane oder Hamstoffsilane; Vernetzer, beispielsweise silanfunktionelle Oligo- und Polymere; Trocknungsmittel, zum Beispiel Vinyltrimethoxysilan, α-funktionelle Silane wie N-(Silylmethyl)-O-methyl-carbamate, insbesondere N-(Methyldimethoxysilylmethyl)-O-methyl-carbamat, (Methacryloxymethyl)silane, Methoxymethylsilane, N-Phenyl-, N-Cyclohexyl- und N-Alkylsilane, Orthoameisensäureester, Calciumoxid oder Molekularsiebe; Stabilisatoren, beispielsweise gegen Wärme, Licht- und UV-Strahlung; flammhemmende Substanzen; oberflächenaktive Substanzen wie Netzmittel, Verlaufsmittel, Enlüftungsmittel oder Entschäumer; Biozide wie Algizide, Fungizide oder das Pilzwachstum hemmende Substanzen; sowie weitere üblicherweise in feuchtigkeitshärtenden Zusammensetzungen eingesetzte Substanzen.

Als Komponente **A** der erfindungsgemässen Zusammensetzung können auch Zusammensetzungen eingesetzt werden, wie sie als einkomponentige, feuchtigkeitshärtende Zusammensetzungen auf Basis von silanfunktionellen Polymeren, insbesondere als Klebstoffe, Dichtstoffe oder Beschichtungen, verwendet werden und beispielsweise unter den Handelsnamen Sikaflex^{®} oder SikaBond^{®} kommerziell erhältlich sind bei Sika Schweiz AG.

Die Komponente **B** enthält neben der wässrigen Emulsion von mindestens einem Epoxidharz weiterhin optional ein Silan, welches ausgewählt ist aus der Gruppe bestehend aus Epoxysilan, insbesondere 3-Glycidoxypropyldimethoxymethylsilan, 3-Glycidoxypropyl-trimethoxysilan oder 3-Glycidoxypropyl-triethoxysilan, (Meth)acrylsilan, insbesondere 3-Methacryloxypropyltrimethoxysilan, und Anhydridosilan, insbesondere (Trimethoxysilyl)propylbernsteinsäureanhydrid oder 3-(Triethoxysilyl)propylbernsteinsäureanhydrid. Bevorzugt handelt es sich beim Silan in der Komponente **B** um ein Epoxysilan oder um ein (Meth)acrylsilan.
Der Einsatz eines solchen Silans in der Komponente **B** der erfindungsgemässen Zusammensetzung kann nach dem Vermischen der Komponenten eine verbesserte Verträglichkeit der unterschiedlichen Phasen sowie eine kovalente Verknüpfung des silanfunktionellen Polymers mit dem Epoxidharz bewirken.

Weiterhin enthält die Komponente **B** optional insbesondere ein Rheologiehilfsmittel oder einen Füllstoff.

Die Komponente **A** der vorhergehend beschriebenen zweikomponentigen Zusammensetzung wird unter Ausschluss von Feuchtigkeit hergestellt und aufbewahrt. In dieser Form ist die Komponente **A** lagerstabil, das heisst, sie kann unter Ausschluss von Feuchtigkeit in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert.

Die Komponente **B** ist typischerweise auch bei atmosphärischen Bedingungen lagerstabil.

Die beiden Komponenten **A** und **B** werden bevorzugt bei Raumtemperatur in einem luftundurchlässigen Gebinde gelagert, wobei das Gebinde für die Komponente **A** insbesondere aus Kunststoff (Polyolefin) oder aus innenbeschichtetem Metall (Aluminium) besteht.

Bei der Applikation der zweikomponentigen Zusammensetzung werden die Komponenten **A** und **B**, beispielsweise durch Rühren, Kneten Walzen oder dergleichen, insbesondere jedoch über einen Statikmischer oder mit Hilfe eines dynamischen Mischers, miteinander vermischt.
Dabei kommt die Komponente **A** in Kontakt mit dem Wasser der wässrigen Emulsion von mindestens einem Epoxidharz aus der Komponente **B**, was zu einer Vernetzung der silanfunktionellen Polymere in der Zusammensetzung führt.

Bei der Applikation der zweikomponentigen Zusammensetzung wird die Komponente **B** vorzugsweise in einem solchen Verhältnis zur Komponente **A** eingesetzt, dass mit dem in der Komponente **B** vorhandenen Wasser mindestens 50%, bevorzugt 100%, aller Silangruppen in der gesamten zweikomponentigen Zusammensetzung umgesetzt werden können.

Insbesondere wird die erfindungsgemässe zweikomponentige Zusammensetzung so eingesetzt, dass das Gewichtsverhältnis der Komponente **A** zu Komponente **B** ≥ 1:1, insbesondere 1:1 bis 100:1, bevorzugt 1.5:1 bis 50: 1, besonders bevorzugt 2:1 bis 20:1 beträgt.

Beim Zusammenführen der beiden Komponenten **A** und **B** kommt es neben der Vernetzung der Zusammensetzung durch Reaktion der Silangruppen zu einer Aushärtung des Epoxidharzes aus der Komponente **B.** Durch die Aushärtung des Epoxidharzes entwickelt die ausgehärtete Zusammensetzung eine deutlich erhöhte Festigkeit.

Der Kontakt der zweikomponentigen Zusammensetzung mit Wasser in Form von Luftfeuchtigkeit ist für die Aushärtung nicht zwingend nötig, kann diese aber ebenfalls begünstigen. Insbesondere kann die Nachhärtung der Zusammensetzung mittels Luftfeuchtigkeit verlaufen.

Die Aushärtung der zweikomponentigen Zusammensetzung erfolgt insbesondere bei Raumtemperatur. In gewissen Fällen kann es vorteilhaft sein, die teilgehärtete Zusammensetzung mit Hilfe von erhöhter Temperatur, beispielsweise im Bereich von 40 bis 100°C, nach- bzw. vollständig auszuhärten.

Insbesondere verläuft die Aushärtung der Zusammensetzung in der Art, dass einerseits eine ausreichende Topf- bzw. Offenzeit gewährleistet ist und andererseits die Aushärtung innerhalb eines Zeitraums von einigen Minuten bis zu wenigen Stunden soweit fortgeschritten ist, dass die Zusammensetzung weiter bearbeitet werden kann bzw. eine mit der Zusammensetzung ausgeführte Verklebung selbsitragend ist und transportiert werden kann.

Weiterhin umfasst die vorliegende Erfindung die Verwendung einer vorhergehend beschriebenen zweikomponentigen Zusammensetzung als Klebstoff, Dichtstoff oder Beschichtung.
Die erfindungsgemässe zweikomponentige Zusammensetzung eignet sich insbesondere zum Verkleben, Abdichten oder Beschichten von Substraten aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl(meth)acrylat, Polyester, Epoxidharz, Kompositmaterialien, Farbe oder Lack.

Bevorzugt ist die Verwendung der zweikomponentigen Zusammensetzung für elastische bis semistrukturelle Klebe- und Abdichtungsanwendungen in der Bau- und Fertigungsindustrie sowie im Fahrzeugbau, beispielsweise für die Fugenabdichtung, Dachabdichtung, Parkettverklebung, Fassadenelementverklebung, Anbauteilverklebung, Nahtabdichtung, Hohlraumversiegelung, Montage, Karosseneverklebung, Scheibenverklebung, Komposit-Verklebung.

Die zweikomponentige Zusammensetzung ist insbesondere auch dann vorteilhaft, wenn aus Gründen des Arbeits- und Gesundheitsschutzes isocyanatfreie Produkte eingesetzt werden sollen.

Weiterhin betrifft die Erfindung eine gehärtete Zusammensetzung, wie sie erhältlich ist aus einer vorhergehend beschriebenen zweikomponentigen Zusammensetzung durch Mischen der Komponente **A** mit der Komponente **B**.

Weiterhin betrifft die Erfindung einen Artikel, welcher eine zumindest teilweise gehärtete Zusammensetzung gemäss vorhergehender Beschreibung aufweist, wobei es sich bei diesem Artikel insbesondere um ein Bauwerk, ein Industriegut oder ein Transportmittel, oder ein Teil davon handelt.
Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspüler, Waschmaschinen, Backöfen, Scheinwerfer, Nebelleuchter oder Solarpanels wie Photovoltaik- oder Solarthermie-Module.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Beschreibung der Messmethoden

Die **Viskosität** wurde auf einem thermostatisierten Kegel-Platten-Viskosimeter Physica UM (Kegeldurchmesser 20 mm, Kegelwinkel 1°, Kegelspitze-PlattenAbstand 0.05 mm, Schergeschwindigkeit 10 bis 1000 s⁻¹) gemessen.

Die mittlere **Teilchengrösse** wurde mittels Laserbeugung auf einem Sympatec-Gerät mit Laserbeugungssensor HELOS gemessen.
Der **Geruch** wurde qualitativ durch Riechen mit der Nase an der vermischten Zusammensetzung beurteilt, wobei unangenehmer, stechender Amingeruch als "stark" und schwacher oder nicht wahrnehmbarer Geruch als "leicht" bewertet wurden.
Zur Bestimmung der **Standfestigkeit** wurde die Zusammensetzung mittels eines Holzspatels vertikal auf ein Stück Pappkarton appliziert und das Abfliessverhalten beobachtet. Die Standfestigkeit wurde als "gut" gewertet, wenn sich die Zusammensetzung innerhalb einer Minute ohne abzufliessen leicht nach unten geneigt hatte; als "sehr gut", wenn sie sich gar nicht bewegt hatte. Zur Messung der Zeit bis zur **Klebefreiheit** (Hautbildungszeit) wurde ein kleiner Teil der raumtemperaturwarmen Zusammensetzung in einer Schichtdicke von ca. 3 mm auf Pappkarton aufgetragen und im Normklima ("NK"; 23±1°C, 50±5% relative Luftfeuchtigkeit) die Zeit bestimmt, die es dauerte, bis beim leichten Antippen der Oberfläche der Zusammensetzung mittels einer Pipette aus LDPE erstmals keine Rückstände auf der Pipette mehr zurückgehen.
Die **Zugfestigkeit,** die **Bruchdehnung,** und der **Elastizitätsmodul** (E-Modul) wurden nach DIN EN 53504 (Zuggeschwindigkeit: 200 mm/min) bestimmt an Hanteln mit einer Länge von 75 mm, bei einer Steglänge von 30 mm und einer Stegbreite von 4 mm, welche durch Ausstanzen aus Filmen von ca. 3 mm Dicke der bei den jeweils angegebenen Bedingungen ausgehärteten Zusammensetzung hergestellt wurden.
Die **Shore A-Härte** wurde bestimmt nach DIN 53505 an im Normklima ausgehärteten Prüfkörpern.

### Herstellung von N-(3-Trimethoxysilyl-propyl)-amino-bernsteisäurediethylester

Zu 179 g (1 mol) 3-Aminopropyl-trimethoxysilan (Silquest^{®}A-1110 von Momentive Performance Materials) wurden unter Feuchtigkeitsausschluss 172 g (1 mol) Maleinsäurediethylester unter gutem Rühren langsam zugetropft und anschliessend 2 Stunden weitergerührt. Es wurde eine farblose Flüssigkeit mit einer Viskosität bei 20°C von 60 mPa·s erhalten.

### Herstellung von silanfunktionellem Polymer P1

Unter Feuchtigkeitsausschluss wurden 1000 g Polyol Acclaim^{®} 12200 (von Bayer; low monol Polyoxypropylendiol, OH-Zahl 11.0 mg KOH/g, Wassergehalt ca. 0.02 Gew.-%), 43.6 g Isophorondiisocyanat (Vestanat^{®} IPDI von Degussa), 126.4 g Diisodecylphthalat (DIDP; Palatinol^{®} Z, von BASF) und 0.12 g Dibutylzinndilaurat unter stetigem Rühren auf 90°C aufgeheizt und auf dieser Temperatur belassen, bis der titrimetrisch bestimmte Gehalt an freien Isocyanatgruppen einen Wert von 0.63 Gew.-% erreicht hatte. Anschliessend wurden 62.3 g N-(3-Trimethoxysilyl-propyl)-amino-bernsteinsäurediethylester eingemischt und die Mischung bei 90°C solange gerührt, bis mittels FT-IR-Spektroskopie kein freies Isocyanat mehr nachgewiesen wurde. Das silanfunktionelle Polyurethanpolymer wurde auf Raumtemperatur abgekühlt und unter Ausschluss von Feuchtigkeit aufbewahrt.

### Herstellung von Epoxidharz-Emulsionen

Emulsion ***E1***: 68.5 Gewichtsteile Bisphenol A-Flüssigharz (Araldite^{®} GY-250 von Huntsman) wurden bei 50°C mit 10 Gewichtsteilen Reaktivverdünner (Araldite^{®} DY-E von Huntsman) und 1.5 Gewichtsteilen Emulgator (Disponil^{®} 23 von Cognis) gemischt und anschliessend mit 20 Gewichtsteilen Wasser über einen Stator-Rotor-Mischer bei einer Drehgeschwindigkeit von 22 m/s kontinuierlich emulgiert. Die erhaltene weisse Emulsion war von cremiger Konsistenz, wies eine Viskosität bei 20°C von ca. 1100 mPa·s, einen Epoxidgruppengehalt von 4.08 mEq/g und eine mittlere Teilchengrösse von ca. 1.6 µm, mit 90% der Teilchen kleiner als 2.7 µm, auf und blieb bei Raumtemperatur während mehr als einem Jahr unverändert.

Emulsion ***E2***: 68.5 Gewichtsteile Bisphenol A-Flüssigharz (Araldite^{®} GY-250 von Huntsman) und 10 Gewichtsteile Bisphenol F-Flüssigharz (D.E.R.™ 354 von Dow Chemical) wurden bei 50°C mit 1.5 Gewichtsteilen Emulgator (Disponil^{®} 23 von Cognis) gemischt und anschliessend mit 20 Gewichtsteilen Wasser über einen Stator-Rotor-Mischer bei einer Drehgeschwindigkeit von 22 m/s kontinuierlich emulgiert. Die erhaltene weisse Emulsion war von cremiger Konsistenz, wies eine Viskosität bei 20°C von ca. 1500 mPa·s, einen Epoxidgruppengehalt von 4.28 mEq/g, eine mittlere Teilchengrösse von ca. 1.5 µm, mit 90% der Teilchen kleiner als 2.6 µm, auf und blieb bei Raumtemperatur während mehr als einem Jahr unverändert.

### Herstellung von Zusammensetzungen

### Beispiele 1 bis 6 sowie Ref1:

Für jedes Beispiel wurden gemäss Tabelle 1 im Normklima das silanfunktionelle Polymer ***P1*** mit einem Härter oder Beschleuniger für Epoxidharze in Form einer Mannich-Base (Ancamine^{®} K54 = 2,4,6-Tris(dimethylaminomethyl)-phenol, von Air Products), einem Katalysator (10 Gew.-% Dibutylzinndilaurat in Diisodecylphthalat) und einem Aminosilan (N-(2-Aminoethyl)-3-aminopropyltrimethoxysilan; Silquest^{®} A-1120 von Momentive Performance Materials) vermischt und diese Zusammensetzung als Komponente **A** mit der Emulsion ***E1*** als Komponente **B** im angegebenen Gewichtsverhältnis mittels eines dynamischen Mischers vermischt, unmittelbar darauf appliziert und im Normklima ausgehärtet.

**Tabelle 1: Zweikomponentige Zusammensetzungen. (Mengen in Gewichtsteilen)**

| Beispiel | ***Ref1*** | ***1*** | ***2*** | ***3*** | ***4*** | ***5*** | ***6*** |
|---|---|---|---|---|---|---|---|
| *Komponente A.* | | | | | | | |
| Polymer ***P1*** | 92 | 92 | 92 | 92 | 92 | 92 | 92 |
| Ancamine^{®} K54 | 6 | 6 | 6 | 6 | 6 | 6 | 6 |
| Katalysator | 1 | 1 | 1 | 1 | 1 | 1 | 1 |
| Aminosilan | 1 | 1 | 1 | 1 | 1 | 1 | 1 |
| *Komponente B:* | | | | | | | |
| Emulsion ***E1*** | - | 10 | 20 | 40 | 60 | 80 | 100 |

Die so erhaltenen Zusammensetzungen wurden auf Geruch, Standfestigkeit, Zeit bis zur Klebefreiheit und auf mechanische Eigenschaften nach der Aushärtung geprüft.

Die Ergebnisse dieser Prüfungen sind in der Tabelle 2 aufgeführt.

**Tabelle 2: Eigenschaften der Zusammensetzungen. ^{a} Zeit bis zur Klebefreiheit bei 0.5 bis 50% Dehnung,**

| Beispiel | ***Ref1*** | ***1*** | ***2*** | ***3*** | ***4*** | ***5*** | ***6*** | |
|---|---|---|---|---|---|---|---|---|
| Geruch | stark | leicht | leicht | leicht | leicht | leicht | leicht | |
| Standfestigkeit | keine | keine | keine | gut | gut | gut | gut | |
| Klebefreiheit^{a} (min.) | 65 | 55 | 50 | 42 | 47 | 52 | 50 | |
| *Mechanische Eigenschaften (21 Tage NK):* | | | | | | | | |
| Zugfestigkeit (MPa) | 0.4 | 1.2 | 3.4 | 2.9 | 3.0 | 2.3 | 2.1 | |
| Bruchdehnung (%) | 50 | 180 | 290 | 260 | 260 | 250 | 230 | |
| E-Modul (MPa)^{b} | 0.9 | 1.4 | 1.8 | 1.6 | 3.5 | 4.0 | 4.9 | |
| *Mechanische Eigenschaften (21 Tage NK* + *2 Tage 80°C).* | | | | | | | | |
| Zugfestigkeit (MPa) | 0.3 | 0.8 | 2.3 | 4.5 | 6.1 | 6.7 | 6.6 | |
| Bruchdehnung (%) | 40 | 140 | 220 | 230 | 220 | 210 | 150 | |
| E-Modul (MPa)^{b} | 0.8 | 1.0 | 1.6 | 2.2 | 7.2 | 11.5 | 19.6 | |

### Beispiele 7 bis 13:

Für jedes Beispiel wurden gemäss Tabelle 3 im Normklima das silanfunktionelle Polymer ***P1*** mit einem Härter oder Beschleuniger für Epoxidharze in Form einer Mannich-Base (Ancamine^{®} K54 = 2,4,6-Tris(dimethylaminomethyl)-phenol, von Air Products) bzw. eines Polyamins (IPDA = Isophorondiamin), einem Katalysator (10 Gew.-% Dibutylzinndilaurat in Diisodecylphthalat) und einem Aminosilan (N-(2-Aminoethyl)-3-aminopropyltrimethoxysilan; Silquese A-1120 von Momentive Performance Materials) vermischt und diese Zusammensetzung als Komponente ***A*** mit der Emulsion ***E2*** als Komponente **B** im angegebenen Gewichtsverhältnis mittels eines dynamischen Mischers vermischt, unmittelbar darauf appliziert und im Normklima ausgehärtet.

**Tabelle 3: Zweikomponentige Zusammensetzungen. (Mengen in Gewichtsteilen)**

| Beispiel | ***7*** | ***8*** | ***9*** | ***10*** | ***11*** | ***12*** | ***13*** |
|---|---|---|---|---|---|---|---|
| *Komponente A*: | | | | | | | |
| Polymer ***P1*** | 92 | 92 | 92 | 92 | 92 | 92 | 92 |
| Ancamine^{®} K54 | 6 | 6 | 0.5 | 6 | 6 | 6 | 6 |
| IPDA | - | - | 5.5 | - | - | - | - |
| Katalysator | 1 | 1 | 1 | 1 | 1 | 1 | 1 |
| Aminosilan | 1 | 1 | 1 | 1 | 1 | 1 | 1 |
| *Komponente **B:*** | | | | | | | |
| Emulsion ***E2*** | 10 | 20 | 30 | 40 | 60 | 80 | 100 |

Die so erhaltenen Zusammensetzungen wurden auf Geruch, Zeit bis zur Klebefreiheit und auf mechanische Eigenschaften nach der Aushärtung geprüft. Weiterhin wurde die Beständigkeit der ausgehärteten Zusammensetzung unter thermischer und hydrolytischer Belastung geprüft, indem einige der wie beschrieben hergestellten Hanteln zusätzlich während einer Woche im Ofen bei 100°C bzw. bei 70°C und 100% relativer Feuchtigkeit (Kataplsma-Bedingungen) gelagert und anschliessend auf Zugfestigkeit, Bruchdehnung und E-Modul geprüft wurden.

Die Ergebnisse dieser Prüfungen sind in der Tabelle 4 aufgeführt.

**Tabelle 4: Eigenschaften der Zusammensetzungen.**

| Beispiel | ***7*** | ***8*** | ***9*** | ***10*** | ***11*** | ***12*** | ***13*** |
|---|---|---|---|---|---|---|---|
| Geruch | leicht | leicht | leicht | leicht | leicht | leicht | leicht |
| Klebefreiheit^{a} (min.) | 32 | 40 | 20 | 41 | 41 | 48 | 49 |
| Standfestigkeit | keine | keine | keine | keine | gut | gut | gut |
| *Mechanische Eigenschaften (21 Tage NK):* | | | | | | | |
| Zugfestigkeit (MPa) | 1.0 | 3.1 | 1.3 | 2.3 | 2.9 | 2.4 | 2.7 |
| Bruchdehnung (%) | 147 | 281 | 152 | 218 | 246 | 233 | 251 |
| E-Modul (MPa)^{b} | 1.3 | 1.8 | 1.50 | 1.7 | 4.3 | 5.0 | 6.9 |
| *Mechanische Eigenschaften (21 Tage NK* + *2 Tage 80°C):* | | | | | | | |
| Zugfestigkeit (MPa) | 0.8 | 1.9 | 1.4 | 2.0 | 4.0 | 4.9 | 5.5 |
| Bruchdehnung (%) | 124 | 203 | 140 | 152 | 130 | 109 | 72 |
| E-Modul (MPa)^{b} | 1.1 | 1.4 | 1.82 | 2.0 | 8.1 | 13.2 | 20.4 |
| *Mechan. Eigenschaften (21 Tage NK* + *2 Tage 80°C* + *7 Tage 100 °C):* | | | | | | | |
| Zugfestigkeit (MPa) | 0.5 | 2.0 | n.b. | 1.8 | 4.2 | 5.3 | 5.8 |
| Bruchdehnung (%) | 86 | 201 | n.b. | 135 | 133 | 112 | 76 |
| E-Modul (MPa)^{b} | 1.0 | 1.5 | n.b. | 2.0 | 7.4 | 12.8 | 20.5 |
| *Mechan. Eigenschaften (21 Tage NK* + *2 Tage 80°C* + *7 Tage Kataplasma):* | | | | | | | |
| Zugfestigkeit (MPa) | 0.6 | 1.8 | n.b. | 2.9 | 5.0 | 6.7 | 7.1 |
| Bruchdehnung (%) | 126 | 200 | n.b. | 176 | 182 | 152 | 98 |
| E-Modul (MPa)^{b} | 0.8 | 1.4 | n.b. | 2.2 | 8.3 | 20.5 | 34.9 |

| | | | | | | | |
|---|---|---|---|---|---|---|---|
| ^{a} Zeit bis zur Klebefreiheit bei 0.5 bis 50% Dehnung. n.b. = nicht bestimmt | | | | | | | |

### Beispiele 14 bis 19 sowie Ref2:

Für jedes Beispiel wurden gemäss Tabelle 5 im Normklima ein kommerzielles STP-Polymer (MS Polymer™ S 203 H von Kaneka) mit einem Härter oder Beschleuniger für Epoxidharze in Form einer Mannich-Base (Ancamine^{®} K54 = 2,4,6-Tris(dimethylaminomethyl)phenol, von Air Products) bzw. eines Polyamins (IPDA= Isophorondiamin), einem Katalysator (10 Gew.-% Dibutylzinndilaurat in Diisodecylphthalat) und einem Aminosilan (N-(2-Aminoethyl)-3-aminopropyltrimethoxysilan; Silquest^{®} A-1120 von Momentive Performance Materials) vermischt und diese Zusammensetzung als Komponente **A** mit der Emulsion ***E1*** als Komponente **B** im angegebenen Gewichtsverhältnis mittels eines dynamischen Mischers vermischt, unmittelbar darauf appliziert und im Normklima ausgehärtet.

**Tabelle 5: Zweikomponentige Zusammensetzungen (Mengen in Gewichtsteilen)**

| Beispiel | ***Ref2*** | ***14*** | ***15*** | ***16*** | ***17*** | ***18*** | ***19*** |
|---|---|---|---|---|---|---|---|
| *Komponente* A: | | | | | | | |
| MS Polymer™ S 203 H | 92 | 92 | 92 | 92 | 92 | 92 | 92 |
| Ancamine^{®} K54 | 6 | 6 | 6 | 6 | 1 | 1 | 6 |
| IPDA | - | - | - | - | 5 | 5 | - |
| Katalysator | 3 | 3 | 3 | 3 | 3 | 3 | 3 |
| Aminosilan | 1 | 1 | 1 | 1 | 1 | 1 | 1 |
| *Komponente B:* | | | | | | | |
| Emulsion ***E1*** | - | 10 | 20 | 30 | 30 | 50 | 60 |

Die so erhaltenen Zusammensetzungen wurden auf Zeit bis zur Klebefreiheit und auf mechanische Eigenschaften nach der Aushärtung geprüft.
Die Ergebnisse dieser Prüfungen sind in der Tabelle 6 aufgeführt.

**Tabelle 6: Eigenschaften der Zusammensetzungen.**

| Beispiel | ***Ref2*** | ***14*** | ***15*** | ***16*** | ***17*** | ***18*** | ***19*** | |
|---|---|---|---|---|---|---|---|---|
| *Aushärtungsgeschwindigkeit:* | | | | | | | | |
| Klebefreiheit^{a} | >8h | 8h | 4-8h | 4-8h | 4h | 4h | 8h | |
| *Mechanische Eigenschaften (11 Tage NK):* | | | | | | | | |
| Zugfestigkeit (MPa) | 0.2 | 0.8 | 15 | 1.6 | 1.8 | 1.9 | 1.8 | |
| Bruchdehnung (%) | 190 | 360 | 370 | 390 | 450 | 470 | 570 | |
| E-Modul (MPa)^{b} | 0.13 | 0.19 | 0.22 | 0.20 | 0.19 | 0.26 | 0.12 | |
| *Mechanische Eigenschaften (11 Tage NK* + *2 Tage 80 °C):* | | | | | | | | |
| Zugfestigkeit (MPa) | 0.3 | 0.4 | 1.7 | 3.5 | 2.2 | 1.8 | 2.8 | |
| Bruchdehnung (%) | 200 | 350 | 390 | 590 | 480 | 530 | 690 | |
| E-Modul (MPa)^{b} | 0.17 | 0.21 | 0.21 | 0.23 | 0.35 | 0.40 | 0.45 | |

| | | | | | | | | |
|---|---|---|---|---|---|---|---|---|
| ^{a} Zeit bis zur Klebefreiheit. ^{b}bei 0.5 bis 50% Dehnung. | | | | | | | | |

### Beispiele 20 bis 22 sowie Ref3 bis Ref6

Für jedes Beispiel wurden gemäss Tabelle 7 im Normklima die Komponente A des kommerziellen Montageklebstoffs Sikaflex^{®}-553 auf Basis von silanterminiertem Polymer (erhältlich von Sika Schweiz AG) mit einem Härter oder Beschleuniger für Epoxidharze in Form einer Mannich-Base (Ancamine^{®} K54 = 2,4,6-Tris(dimethylaminomethyl)phenol, von Air Products) und gegebenenfalls einem Katalysator (DBU = 1,8-Diazabicyclo[5,4.0]undec-7-en, oder TMG = 1,1,3,3,-Tetramethylguanidin) vermischt und diese Zusammensetzung als Komponente **A** mit der Emulsion ***E2*** als Komponente **B** im angegebenen Gewichtsverhältnis mittels eines dynamischen Mischers vermischt, unmittelbar darauf appliziert und im Normklima ausgehärtet.

**Tabelle 7: Zweikomponentige Zusammensetzungen, (Mengen in Gewichtsteilen)**

| Beispiel | ***Ref3*** | ***Ref4*** | ***Ref5*** | ***Ref6*** | ***20*** | ***21*** | ***22*** |
|---|---|---|---|---|---|---|---|
| *Komponente A:* | | | | | | | |
| Sikaflex^{®}-553 Komp. A | 100 | 99.8 | 90.9 | 90.7 | 87.4 | 87.4 | 87.4 |
| Ancamine^{®} K54 | - | - | - | - | 3.3 | 3.3 | 3.3 |
| DBU | - | 0.2 | - | 0.2 | - | 0.2 | - |
| TMG | - | - | - | - | - | - | 0.2 |
| *Komponente B:* | | | | | | | |
| Emulsion ***E2*** | - | - | 9.1 | 9.1 | 9.1 | 9.1 | 9.1 |

Die so erhaltenen Zusammensetzungen wurden auf Standfestigkeit, Zeit bis zur Klebefreiheit und auf mechanische Eigenschaften nach 7 Tagen (Zugfestigkeit, Bruchdehnung, E-Modul) bzw. 14 Tagen (Shore A) Aushärtung im Normklima geprüft.

Die Ergebnisse dieser Prüfungen sind in der Tabelle 8 aufgeführt.

**Tabelle 8: Eigenschaften der Zusammensetzungen.**

| Beispiel | ***Ref3*** | ***Ref4*** | ***Ref5*** | ***Ref6*** | ***20*** | ***21*** | ***22*** | |
|---|---|---|---|---|---|---|---|---|
| Standfestigkeit | gut | gut | sehr gut | sehr gut | sehr gut | sehr gut | sehr gut | |
| Klebefreiheit^{a} (min.) | 40 | 22 | 33 | 18 | 72 | 22 | 40 | |
| Zugfestigkeit (MPa) | 2.4 | 2.3 | 2.7 | 2.8 | 4.2 | 4.6 | 4.7 | |
| Bruchdehnung (%) | 210 | 240 | 420 | 440 | 300 | 240 | 240 | |
| E-Modul^{b} (MPa) | 2.8 | 2.8 | 1.6 | 2.2 | 7.0 | 6.6 | 7.0 | |
| Shore A | 51 | 46 | 41 | 42 | 70 | 67 | 67 | |

| | | | | | | | | |
|---|---|---|---|---|---|---|---|---|
| ^{a} Zeit bis zur Klebefreihe. ^{b} bei 0.5 bis 5% Dehnung. | | | | | | | | |

### Beispiele 23 bis 28

Für jedes Beispiel wurden gemäss Tabelle 9 im Normklima die Komponente A des kommerziellen Montageklebstoffs Sikaflex^{®}-553 auf Basis von silanterminiertem Polymer (erhältlich von Sika Schweiz AG) mit einem Härter oder Beschleuniger für Epoxidharze in Form eines tertiären Amins (Jeffcat^{®} Z-130 = N,N-Dimethyl-N'-(dimethylaminopropyl)-1,3-propandiamin, von Huntsman; DMP = N,N'-Dimethylpiperazin; Jeffcat^{®} ZF-20 = Bis(2-dimethylaminoethyl)-ether, von Huntsman) bzw. eines Imidazols sowie einem Katalysator (DBU = 1,8-Diazabicyclo[5.4,0]undec-7-en) vermischt und diese Zusammensetzung als Komponente **A** mit der Emulsion ***E2*** als Komponente **B** im angegebenen Gewichtsverhältnis mittels eines dynamischen Mischers vermischt, unmittelbar darauf appliziert und im Normklima ausgehärtet.

**Tabelle 9: Zweikomponentige Zusammensetzungen. (Mengen in Gewichtsteilen)**

| Beispiel | ***23*** | ***24*** | ***25*** | ***26*** | ***27*** | ***28*** |
|---|---|---|---|---|---|---|
| *Komponente A:* | | | | | | |
| Sikaflex^{®}-553 Komp.A | 88.4 | 88.6 | 87.7 | 89.2 | 89.0 | 88.7 |
| Jeffcat ® Z-130 | 2.3 | - | - | - | - | - |
| DMP | - | 2.1 | - | - | - | - |
| Jeffcat^{®} ZF-20 | - | - | 3.0 | - | - | - |
| 1-Methylimidazol | - | - | - | 1.5 | - | - |
| 1-Vinylimidazol | - | - | - | - | 1.7 | - |
| 2-Ethyl-4-methylimidazol | - | - | - | - | - | 2.0 |
| DBU | 0.2 | 0.2 | 0.2 | 0.2 | 0.2 | 0.2 |
| *Komponente B:* | | | | | | |
| Emulsion ***E2*** | 9.1 | 9.1 | 9.1 | 9.1 | 9.1 | 9.1 |

Die so erhaltenen Zusammensetzungen wurden auf Standfestigkeit, Zeit bis zur Klebefreiheit und auf mechanische Eigenschaften nach 7 Tagen (Zugfestigkeit, Bruchdehnung, E-Modul) bzw. 14 Tagen (Shore A) Aushärtung im Normklima geprüft.

Die Ergebnisse dieser Prüfungen sind in der Tabelle 10 aufgeführt.

**Tabelle 10: Eigenschaften der Zusammensetzungen.**

| Beispiel | ***23*** | ***24*** | ***25*** | ***26*** | ***27*** | ***28*** |
|---|---|---|---|---|---|---|
| Standfestigkeit | sehr gut | sehr gut | sehr gut | sehr gut | sehr gut | sehr gut |
| Klebefreiheit^{a} (min.) | 8 | 14 | 13 | 8 | 7 | 25 |
| Zugfestigkeit (MPa) | 3.8 | 3.8 | 3.8 | 3.6 | 3.5 | 3.9 |
| Bruchdehnung (%) | 120 | 240 | 180 | 290 | 280 | 230 |
| E-Modul^{b} (MPa) | 8.7 | 7.3 | 6.2 | 6.2 | 5.5 | 7.8 |
| Shore A | 70 | 56 | 70 | 56 | 52 | 60 |

| | | | | | | |
|---|---|---|---|---|---|---|
| ^{a} Zeit bis zur Klebefreiheit bei 0.5 bis 5% Dehnung. | | | | | | |

### Beispiele 29 und Ref7

Für jedes Beispiel wurden gemäss Tabelle 11 im Normklima die Komponente A des kommerziellen Montageklebstoffs Körapop 225 auf Basis von silanterminiertem Polymer (erhältlich von Kömmerling Chemische Fabrik GmbH, Deutschland) mit einem Härter oder Beschleuniger für Epoxidharze in Form einer Mannich-Base (Ancamine^{®} K54 = 2,4,6-Tris(dimethylaminomethyl)-phenol, von Air Products) sowie einem Katalysator (DBU = 1,8-Diazabicyclo-[5.4.0]undec-7-en) vermischt und diese Zusammensetzung als Komponente **A** mit der Emulsion *E2* als Komponente **B** im angegebenen Gewichtsverhältnis mittels eines dynamischen Mischers vermischt, unmittelbar darauf appliziert und im Normklima ausgehärtet.

**Tabelle 11: Zweikomponentige Zusammensetzungen, (Mengen in Gewichtsteilen)**

| Beispiel | ***Ref7*** | ***29*** |
|---|---|---|
| *Komponente A*: | | |
| Körapop 225 Komp. A | 100 | 87.4 |
| Ancamine^{®} K54 | - | 3.3 |
| DBU | - | 0.2 |
| *Komponente B:* | | |
| Emulsion ***E2*** | - | 9.1 |

Die so erhaltenen Zusammensetzungen wurden auf Standfestigkeit, Zeit bis zur Klebefreiheit und auf mechanische Eigenschaften nach 7 Tagen (Zugfestigkeit, Bruchdehnung, E-Modul) bzw. 14 Tagen (Shore A) Aushärtung im Normklima geprüft.

Die Ergebnisse dieser Prüfungen sind in der Tabelle 12 aufgeführt.

**Tabelle 12: Eigenschaften der Zusammensetzungen.**

| Beispiel | ***Ref7*** | ***29*** |
|---|---|---|
| Standfestigkeit | gut | sehr gut |
| Klebefreiheit^{a} (min.) | 27 | 23 |
| Zugfestigkeit (MPa) | 2.6 | 3.0 |
| Bruchdehnung (%) | 420 | 180 |
| E-Modul^{b} (MPa) | 1.5 | 22.7 |
| Shore A | 40 | 72 |

| | | |
|---|---|---|
| ^{a} Zeit bis zur Klebefreiheit. ^{b} bei 0.5 bis 5% Dehnung. | | |

## Patentansprüche

1. Zweikomponentige Zusammensetzung bestehend aus einer Komponente **A** umfassend
- mindestens ein silanfunktionelles Polymer, und
- mindestens einen Härter oder Beschleuniger für Epoxidharze;
und einer Komponente **B** umfassend
- mindestens eine wässrige Emulsion von mindestens einem Epoxidharz.

2. Zweikomponentige Zusammensetzung gemäss Anspruch 1, **dadurch gekennzeichnet, dass** die wässrige Emulsion von mindestens einem Epoxidharz 10 bis 40 Gew.-% Wasser aufweist.

3. Zweikomponentige Zusammensetzung gemäss Anspruch 1 oder 2, **dadurch gekennzeichnet, dass** das Epoxidharz eine mittlere Teilchengrösse im Bereich von 0.05 bis 10 µm aufweist.

4. Zweikomponentige Zusammensetzung gemäss einem der Ansprüche 1 bis 3, **dadurch gekennzeichnet, dass** die Emulsion eine Teilchengrössenverteilung aufweist, bei welcher das Grössenverhältnis der grössten zu den kleinsten Partikeln einen Wert im Bereich von ≤ 25 aufweist.

5. Zweikomponentige Zusammensetzung gemäss einem der Ansprüche 1 bis 4, **dadurch gekennzeichnet, dass** 90% der Teilchen in der Emulsion kleiner sind als 6 µm.

6. Zweikomponentige Zusammensetzung gemäss einem der vorhergehenden Ansprüche, **dadurch gekennzeichnet, dass** der Härter oder Beschleuniger für Epoxidharze ausgewählt ist aus der Gruppe bestehend aus tertiären Polyaminen, Mannich-Basen, Polymercaptanen und Imidazolen.

7. Zweikomponentige Zusammensetzung gemäss einem der vorhergehenden Ansprüche, **dadurch gekennzeichnet, dass** der Härter oder Beschleuniger für Epoxidharze ausgewählt ist aus der Gruppe bestehend aus Pentamethyldiethylentriamin, N,N-Dimethyl-N'-(dimethylaminopropyl)-1,3-propandiamin, Bis(2-dimethylaminoethyl)ether, Bis-(dimethylaminoethyl)-piperazin, N,N'-Dimethylpiperazin, Dimethylaminomethylphenol, 2,4,6-Tris(dimethylaminomethyl)phenol, 2,4,6-Tris((3-(dimethylamino)propyl)aminomethyl)phenol, 1-Methylimidazol, 1-Ethylimidazol, 1-Vinylimidazol, 2-Methylimidazol, 2-Ethylimidazol, 2-Isopropylimidazol, 2-Heptadecylimidazol, 2-Ethyl-4-methylimidazol und 1-Benzyl-2-methylimidazol.

8. Zweikomponentige Zusammensetzung gemäss einem der vorhergehenden Ansprüche, **dadurch gekennzeichnet, dass** sie zusätzlich mindestens einen Katalysator für die Vernetzung der silanfunktionellen Polymere mittels Feuchtigkeit umfasst.

9. Zweikomponentige Zusammensetzung gemäss Anspruch 8, **dadurch gekennzeichnet, dass** der Katalysator für die Vernetzung der silanfunktionellen Polymere mittels Feuchtigkeit ausgewählt ist aus der Gruppe bestehend aus Organozinnverbindungen, Titanaten, Zirkonaten, tertiären Aminen, Amidinen und Guanidinen.

10. Zweikomponentige Zusammensetzung gemäss einem der vorhergehenden Ansprüche, **dadurch gekennzeichnet, dass** sie zusätzlich mindestens ein Aminosilan, ein Epoxysilan oder ein Mercaptosilan umfasst.

11. Zweikomponentige Zusammensetzung gemäss einem der vorhergehenden Ansprüche, **dadurch gekennzeichnet, dass** sie zusätzlich mindestens einen Füllstoff umfasst.

12. Zweikomponentige Zusammensetzung gemäss einem der vorhergehenden Ansprüche, **dadurch gekennzeichnet, dass** der Anteil des Härters oder Beschleunigers für Epoxidharze 0.5 bis 15 Gew.-% bezogen auf die Komponente **A** beträgt.

13. Zweikomponentige Zusammensetzung gemäss einem der vorhergehenden Ansprüche, **dadurch gekennzeichnet, dass** das Gewichtsverhältnis der Komponente **A** zu Komponente **B** 1:1 bis 100:1 beträgt.

14. Verwendung einer zweikomponentigen Zusammensetzung gemäss einem der Ansprüche 1 bis 13 als Klebstoff, Dichtstoff oder Beschichtung.

15. Ausgehärtete Zusammensetzung erhalten aus einer zweikomponentigen Zusammensetzung gemäss einem der Ansprüche 1 bis 13 durch Mischen der Komponente **A** mit der Komponente **B.**
